# EUROPÄISCHE PATENTSCHRIFT

(11) **EP 3 846 660 B1**
(45) Veröffentlichungstag und Bekanntmachung des Hinweises auf die Patenterteilung: **04.10.2023**
(21) Anmeldenummer: 19816196.0
(22) Anmeldetag: 15.10.2019
(51) Int. Cl.: A47B 87/02, F16B 5/00, F16B 12/26

(54) **MONTAGEVORRICHTUNG FÜR KASTENMÖBEL**
MOUNTING DEVICE FOR FURNITURE UNITS
DISPOSITIF DE MONTAGE POUR MEUBLE DE RANGEMENT

(30) Priorität: 16.10.2018 DE 102018008159
(43) Veröffentlichungstag der Anmeldung: 14.07.2021
(73) Patentinhaber: Assmann Büromöbel GmbH & Co. KG, 49324 Melle (DE)
(72) Erfinder: KAHNWALD, Daniel, 49324 Melle (DE); ALTHOFF, Thorsten, 49326 Melle (DE); NIENHÜSER, Carsten, 49324 Melle (DE)
(74) Vertreter: Hofstetter, Schurack & Partner
(86) Internationale Anmeldenummer: PCT/DE2019/000273
(87) Internationale Veröffentlichungsnummer: WO 2020/078501

(56) Entgegenhaltungen:
- DE-A1-102010 047 502
- DE-B3- 10 333 809

## Beschreibung

### Gebiet der Erfindung

Die Erfindung betrifft eine Montagevorrichtung für Kastenmöbel und ferner auch ein Kastenmöbel mit einer Montagevorrichtung und eine Anordnung von mit der Montagevorrichtung montierten Kastenmöbel.

### Stand der Technik

Es gibt im Stand der Technik viele Beispiele für Anordnungen von Kastenmöbeln in Büros. Üblicherweise werden solche Kastenmöbel wie Regalen und Schränken als Ablagen verwendet. Beim Einbau muss klar sein, welche Schränke und Regale wie ausgebildet sein sollen und wohin diese kommen. Nach der Installation der Kastenmöbel sind diese in der Regel nur noch mit Aufwand zu versetzen und sehr schwer ohne Beschädigungen zu demontieren.

Anordnungen von Kastenmöbeln wie Schrank- und Regalmodulen müssen bei der Verwendung als Büromöbel einerseits flexibel aufbaubar sein, andererseits aber stabil und robust befestigt und aufgestellt sein, damit die Möbel nicht durch Berührungen verschoben werden können. Zusätzlich soll das Erscheinungsbild der Möbel ansprechend sein. Dies ist bei den bisherigen Lösungen nicht garantiert.

Die DE 10 333 809 B3 offenbart eine Arretiervorrichtung zur Fixierung zweier Möbelstücke aneinander, in denen jeweils eine Arretiereinrichtung montierbar ist. Die Arretiervorrichtung umfasst zwei Arretiereinrichtungen, wobei die beiden Arretiereinrichtungen funktionsgleich ausgebildet sind. Jede Arretiereinrichtung weist ein topfförmiges Festteil auf, wobei in dem zugehörigen Boden des topfförmigen Festteils eine Ausnehmung ausgebildet ist, die von einer das Festeil axial durchsetzenden Zentralachse radial nach außen verlaufende Ausnehmungsabschnitte umfasst. Von der Zentralachse ausgehend sind zumindest zwei radial nach außen verlaufende Ausnehmungsabschnitte vorgesehen, die in regelmäßigen Winkelabschnitten zueinander angeordnet sind. Im Innenraum des topf- oder gehäuseförmigen Festteiles ist ein als Einstellglied wirkendes Drehteil vorgesehen, wobei das Drehteil ein Betätigungsteil mit einem axial in Richtung Boden versetzt liegenden Arretierelement umfasst. Das Arretierelement weist eine Formgebung mit radial nach außen vorstehenden Arretierarmen so auf, dass das so gebildete Arretierelement durch die Ausnehmung axial hindurchführbar ist, und zur Bewirkung einer Arretierung zwei mit ihrem Bodenbereich aufeinander zuweisende Arretiereinrichtungen dadurch aneinander fixierbar sind, dass durch Eindrücken des Einstellgliedes oder Drehteiles einer Arretiereinrichtung das zugehörige Arretierelement durch die Ausnehmung im Boden der eigenen Arretiereinrichtung und durch die entsprechende Ausnehmung im Boden der benachbart liegenden zweiten Arretiereinrichtung hindurchführbar und durch nachfolgende Verdrehbewegung hinter den zwischen den Ausnehmungsabschnitten gebildeten und zum Boden der anderen Arretiereinrichtung gehörenden Arretiervorsprüngen verriegelbar ist.

Die DE 20 2012 103 971 U1 offenbart ein modulares Möbelsystem, welches wenigstens zwei miteinander lösbar verbindbare, kastenförmige Elemente aufweist, wobei zur lösbaren Verbindung der wenigstens zwei kastenförmigen Elemente wenigstens ein Möbelboden vorgesehen ist, welcher entlang seiner Längserstreckung wenigstens ein Verriegelungsprofil aufweist, in welches ein durch wenigstens eine Öffnung in der Ober- und/oder Unterwand des jeweiligen kastenförmigen Elementes hindurchsteckbares Verriegelungselement lösbar eingreift.

Außerdem offenbart die DE 10 2010 047 502 A1 ein Verbindungssystem zum Verbinden von Möbelstücken.

### Darstellung der Erfindung

Aufgabe der Erfindung ist es daher eine Montagevorrichtung für Kastenmöbel bereitzustellen, die eine einfache und flexible Montage und Demontage von Anordnungen der Kastenmöbel erlaubt, gleichzeitig aber das optische Erscheinungsbild nicht beeinträchtigt.

Diese Aufgabe wird gelöst durch eine Montagevorrichtung nach Anspruch 1. Weitere die Erfindung ausgestaltende Merkmale sind in den Unteransprüchen enthalten.

Eine erfindungsgemäße Montagevorrichtung zum Befestigen von Kastenmöbeln wie bspw. Schrank- oder Regalmodulen verwendet, die gestapelt dann einen entsprechenden Schrank oder ein entsprechendes Regal ausbilden, umfasst ein Basiselement mit einer Lagerplatte und einem Halteelement, wobei die Lagerplatte teilweise von dem Halteelement abgedeckt und das Halteelement von der Lagerplatte beabstandet ist, und ein Rastelement, das mit zumindest einem Einhakvorsprung axial an die Lagerplatte bewegbar ist und das Rastelement an der Lagerplatte verschwenkbar ist, so dass der Einhakvorsprung in Umfangsrichtung unter das Halteelement bewegbar ist, wobei in dem Basiselement oder dem Rastelement eine Rastaussparung und an dem Gegenstück ein entsprechender Rastvorsprung vorgesehen ist, so dass der Rastvorsprung in der Endstellung in die Rastaussparung einrastet, und wobei der Rastvorsprung auf einem sich radial erstreckenden Federelement angeordnet ist. Vorgesehen ist, dass das Rastelement axial in das Basiselement geschoben wird und in Umfangsrichtung verdreht wird, so dass die Montagevorrichtung in sich in axialer Richtung befestigt ist und nichtmehr auseinander gezogen werden kann. Durch eine solche Montagevorrichtung kann eine beliebige Anordnung von Kastenmöbeln ausgebildet werden, die ebenso leicht demontiert wie aufgebaut werden kann, ohne dass das äußere Erscheinungsbild beeinträchtigt würde. Die Lagerplatte des Basiselements kann dabei auch Teil des Kastenmöbels sein, so dass das Rastelement in eine Aussparung an dem Kastenmöbel gedrückt wird und unter das Halteelement gedreht wird, dass dann separat am Kastenmöbel befestigt ist.

Vorzugsweise sind das Basiselement und/oder das Rastelement einstückig ausgebildet. Dadurch wird die Teilezahl in der Herstellung reduziert und darüber hinaus auch die Montage der Montagevorrichtung vereinfacht. Das Halteelement ist insbesondere am Umfangsbereich des Basiselements, insbesondere ausschließlich am äußeren Umfangsbereich, angebracht und erstreckt sich radial nach innen. Dadurch ist es möglich das Rastelement in einfacher Weise in beide Richtungen und durchgehend drehbar zu gestalten weil es keine Blockade auf der Lagerplatte gibt, was die Handhabung vereinfacht.

In der Lagerplatte oder dem Rastelement ist eine Vertiefung und an dem Gegenstück ein entsprechender Vorsprung vorgesehen sein, so dass der Vorsprung in der Endstellung in der Vertiefung einrastet. Dadurch wird die Endstellung stabilisiert, gleichzeitig aber auch einfach demontierbar gehalten, da das Rastelement einfach aus der Vertiefung gedreht werden kann. Der Vorsprung ist ferner auf dem sich radial erstreckenden (Blatt-) Federelement angeordnet. Dadurch wird dem Rastelement die nötige Flexibilität gegeben.

Das Basiselement kann am Außenrand einen Befestigungsbereich aufweisen, in dem insbesondere Bohrungen vorgesehen sind. Dies stellt eine einfache Montagemöglichkeit der Montagevorrichtung am Kastenmöbel dar, ohne dass die Befestigungselemente wie Schrauben, Nieten, Nägel oder ähnliches im Befestigungsbereich des Basis- und des Rastelements angeordnet sind.

Das Basiselement kann eine Vielzahl von Halteelementen und das Rastelement eine Vielzahl von radial vorstehenden Rastvorsprüngen aufweisen, insbesondere sind die Halteelemente und die Rastelemente in regelmäßigen umfänglichen Abständen angeordnet. Durch die mehrfache Anordnung von Halteelementen und Rastvorsprüngen wird die Montagevorrichtung in der montierten Endstellung wesentlich stabiler und hält die Kastenmöbel besser aneinander. Die Halteelemente stehen vorzugsweise maximal 10mm, insbesondere maximal 5mm und weiter bevorzugt maximal 3mm nach innen vor. Am Außenrand ist die Haltekraft der Halteelemente durch das bessere Moment außerdem vorteilhaft.

Bevorzugt ist im Zentralbereich des Basiselements und des Rastelements ein komplementäres Steckelement wie beispielsweise eine Zentrierbohrung oder ein Zentriervorsprung vorgesehen, mit dem das Basiselement und das Rastelement ausrichtbar sind. Beispielsweise kann das Steckelement als Vorsprung und Aussparung ausgebildet sein, die jeweils am Basiselement oder am Rastelement vorgesehen sind. Bevorzugt ist der Vorsprung dabei am Basiselement vorgesehen, er kann aber prinzipiell auch am Rastelement ausgebildet sein.

Zumindest das Rastelement, bevorzugt aber die ganze Montagevorrichtung, ist aus Kunststoff ausgebildet. Kunststoff ist ausreichend elastisch und flexibel, gleichzeitig aber auch fest genug um den Anforderungen der Montagevorrichtung zu entsprechen.

Ferner zielt die Erfindung auch auf ein Kastenmöbel, das eine der vorhergehenden Montagevorrichtungen umfasst, wobei das Basiselement auf einer ersten Verbindungsseite und das Rastelement auf einer gegenüberliegenden Verbindungsseite vorgesehen ist. Die Lagerplatte kann bei einer solchen Ausführung auch durch das Kastenmöbel selbst bereitgestellt werden.

Eine Mehrzahl von Kastenmöbel können auch in einer Anordnung ausgestaltet sein, die zumindest eine der vorhergehenden Montagevorrichtungen zur Verbindung der Mehrzahl von Kastenmöbeln umfassen.

### Kurze Beschreibung der Figuren

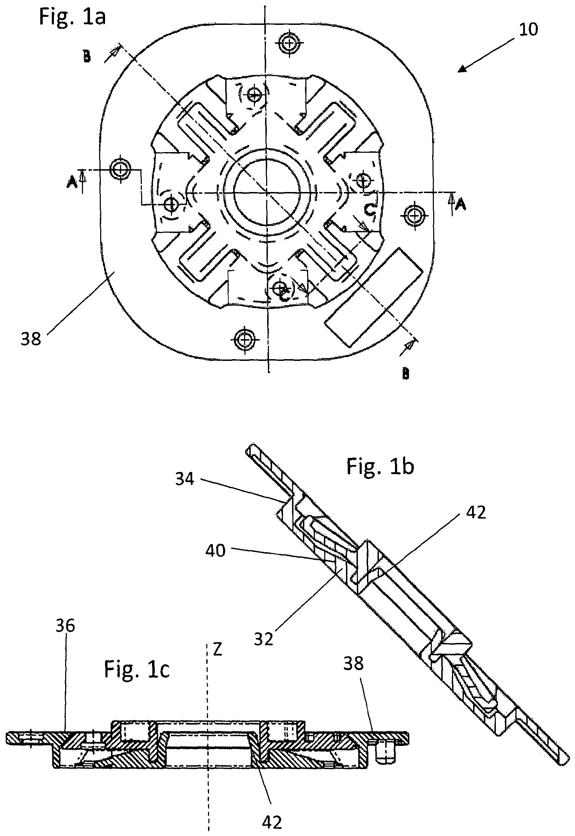

Figur 1a zeigt eine Draufsicht auf eine Montierte Montagevorrichtung;

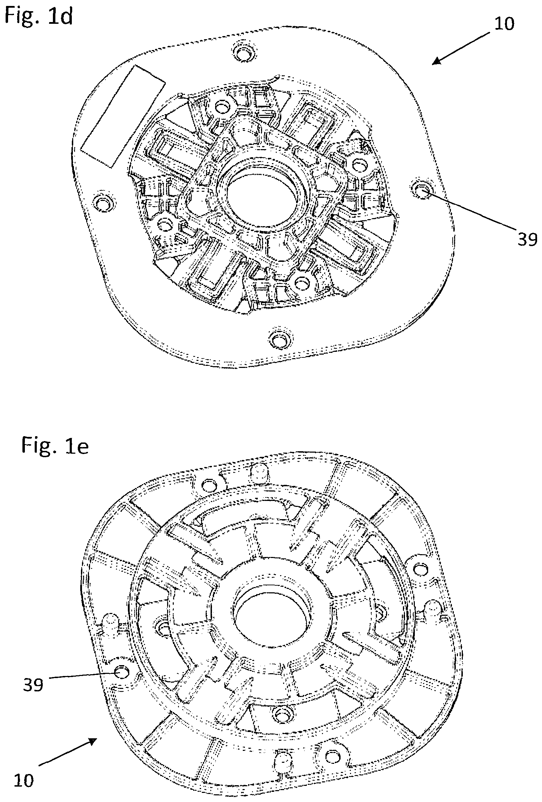

Figur 1 b zeigt den Schnitt B-B aus Figur 1a;
Figur 1 c zeigt den Schnitt A-A aus Figur 1 a;
Figur 1d zeigt eine isometrische Sicht auf die Montagevorrichtung von der Oberseite;
Figur 1e zeigt eine isometrische Sicht auf die Montage orrichtung von der Unterseite;
Figur 2a zeigt eine isometrische Sicht auf das Basiselement der Montagevorrichtung von der Oberseite;
Figur 2b zeigt eine isometrische Sicht auf das Basiselement der Montagevorrichtung von der Unterseite;
Figur 3a zeigt eine isometrische Sicht auf das Rastelement der Montagevorrichtung von der Oberseite;
Figur 3b zeigt eine isometrische Sicht auf das Rastelement der Montagevorrichtung von der Unterseite; und
Figur 4 zeigt eine Anordnung von Kastenmöbeln mit Montageplatten. Beschreibung der bevorzugten Ausführungsformen

Wenn im folgenden ist von "Oben" und "Unten" gesprochen wird, bezieht sich dies auf die Montagevorrichtung, die in Figur 1 dargestellt ist. In einer üblichen Einbausituation ist das Basiselement auf der Oberseite eines ersten Kastenmöbels oder einer Einbauplatte angebracht und das Rastelement auf der Unterseite, des Kastenmöbels, das auf das erste aufmontiert werden soll. Dabei ist das Basiselement in Bezug auf das Rastelement "unten" und das Rastelement in Bezug auf das Basiselement "oben". Ferner werden die Begriffe "axial", "radial" und "umfänglich" verwendet. Axial betrifft eine Richtung entlang der Achse Z (Siehe Figur 1 c), radial eine Richtung senkrecht zur Achse Z und umfänglich eine Richtung um die Achse Z herum.

Die Montagevorrichtung 10 umfasst ein Basiselement 30 und ein Rastelement 50. Prinzipiell wird das Rastelement 50 axial in das Basiselement 30 geschoben und in Umfangsrichtung verdreht, so dass die Montagevorrichtung 10 in sich in axialer Richtung befestigt ist und nicht mehr auseinander gezogen werden kann. Eine solche Montagevorrichtung 10 wird üblicherweise zum Befestigen von Kastenmöbeln wie bspw. Schrank- oder Regalmodulen verwendet, die gestapelt dann einen entsprechenden Schrank oder ein entsprechendes Regal ausbilden.

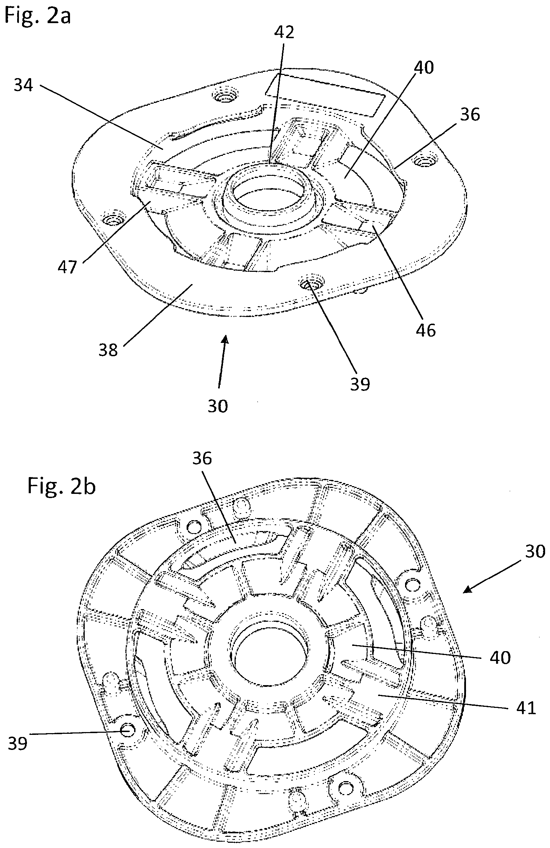

In den Figuren 2a und 2b ist eine bevorzugte Ausführungsform eines Basiselements dargestellt. Das Basiselement 30 ist in der in den Figuren gezeigten Ausführungsform einstückig ausgebildet und umfasst eine Lagerplatte 32 an deren Außenumfang zumindest eine sich axial ersteckende Wand 34. Die Wand 34 kann umlaufend um die Lagerplatte 32 geschlossen ausgebildet sein, kann aber auch lediglich an bestimmten an Bereichen vorhanden sein, insbesondere gleichmäßig um den Umfang verteilt, so dass zwischen den Wandbereichen Aussparungen vorgesehen sind. Die Basisplatte 30 kann aber auch aus mehreren Einzelteilen aufgebaut sein.

Das Basiselement 30 umfasst ferner ein Halteelement 36 das zum Halten des Rastelements 50 dient. Generell ist das Halteelement 36 eine Überdachung eines Teils der Lagerplatte 32 unter dem ein Einhakvorsprung 58 des Rastelements 50 in der montierten Endstellung der Montagevorrichtung 10 gehalten ist. Das Halteelement 36 kann beispielsweise an einer vorbestimmten Stelle am Lagerelement 32 durch eine zusätzliche sich in axialer Richtung erstreckende Wand (nicht dargestellt) befestigt sein. Diese zusätzliche Wand kann dann auch als Anschlag dienen, die die Endstellung des Rastelements 50 bestimmt. In der bevorzugten und in den Figuren gezeigten Ausführungsform ist das Halteelement 36 als radial nach innen vorstehende Vorsprung ausgebildet. Dieser Vorsprung ist vorzugsweise maximal 10mm, insbesondere 5mm oder auch nur 2mm vorstehend. Bevorzugt sind mehrere Halteelemente 36 vorgesehen, beispielsweise gleichmäßig am Umfang angeordnet. In den Figuren 1 a, 2a sind beispielsweise vier Halteelemente 34 vorgesehen, die jeweils in gleichen Abständen gegenüberliegend angeordnet sind.

Am oberen Umfangsbereich der axialen Wand 24 ist vorzugsweise ein Befestigungsbereich 38 vorgesehen, der sich radial erstreckt. Auch der Befestigungsbereich 38 kann komplett umfänglich vorgesehen sein oder nur abschnittsweise. In den Figuren ist ein komplett um den Umfang vorhandener Befestigungsbereich 28 dargestellt. Der Befestigungsbereich weist auf seiner oberen Seite eine oder mehrere Bohrungen 39 auf, mit der das Basiselement 30 an bzw. in einem Kastenmöbel mittels einem Befestigungsmittel wie Schrauben oder Nägel befestigt werden kann. Die Bohrungen können auch in der axialen Wand 34 vorgesehen sein oder am Boden der Lagerplatte 32. Andere Arten der Befestigung sind beispielsweise Verleimen oder eine Presspassung mit der das Basiselement 30 in einer entsprechenden Aussparung des Kastenmöbels eingesteckt wird.

Die Lagerplatte 32 umfasst in der in den Figuren 2a und 2b gezeigten Ausführungsform ferner eine Rastaussparung 46, die für die Aufnahme eines später beschriebenen Rastvorsprungs 56 dient. Die Rastaussparung 46 ist vorzugsweise komplementär zum Rastvorsprungs 56 ausgebildet, so dass der Rastvorsprungs 56 genau in die Rastaussparung 46 hineinpasst. In der bevorzugten Ausführungsform ist an einer oder beiden Seiten der Rastaussparung 46 eine Rampe 47 vorgesehen, die das Einsetzen des Rastvorsprungs 56 erleichtert. Mittig in der Lagerplatte 32 kann eine Zentrierbohrung oder ein Zentriervorsprung 42 vorgesehen sein, die dazu dienen kann, das Rastelement 50 in Bezug auf das Basiselement 30 mittig auszurichten und die Elemente des Rastelements 50 in die richtigen Positionen zu bringen. Der Zentriervorsprung 42 ist hier als ein vorstehender Ring ausgebildet und weist mittig ebenfalls eine Bohrung auf, was das Gewicht der Montagevorrichtung reduziert. In der gezeigten Ausführungsform ist ferner eine Außenring 40 um die Zentrierbohrung 42 angebracht, von der sich Radialstreben nach außen zur Außenwand 34 erstrecken. Der Außenring 40 ist insbesondere mit einer Rampe ausgebildet und die Radialstreben 41 weisen vorzugsweise jeweils die Rastaussparung 46 auf, wie es beispielsweise in Figur 2a dargestellt ist.

Die Lagerplatte 32 selbst kann durch ein eigenes Element ausgebildet sein, beispielsweise durch das Kastenmöbel selbst, aber das Basiselement 30 kann auch mehrere Elemente umfassen, die auch miteinander verbunden sein können.

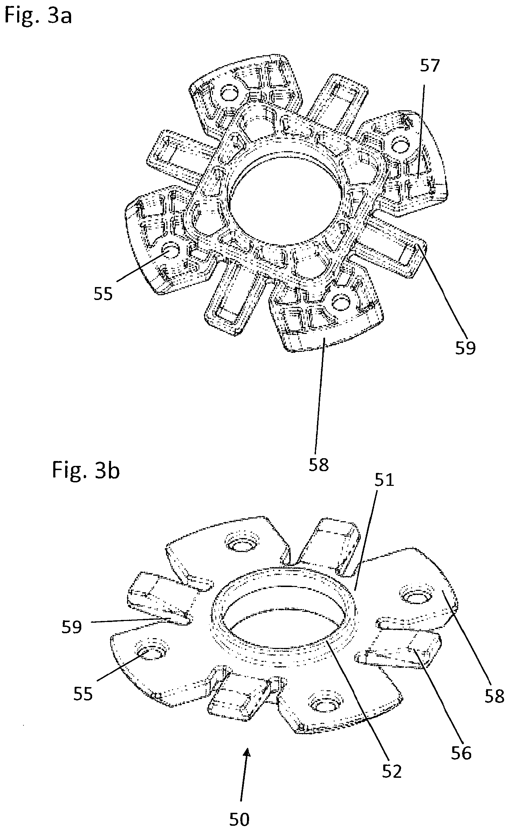

In den Figuren 3a und 3b ist das Rastelement 50 dargestellt. Figur 3a zeigt das Rastelement von der Seite, die am Kastenmöbel anliegt, und Figur 3b zeigt das Rastelement von der Seiten die in Richtung des Basiselements 30 zeigt. Das Rastelement 50 ist das zum Basiselement 30 komplementäre Verschlusselement, um die Montagevorrichtung 10 zu verschließen. Das Rastelement 30 weist vorzugsweise ebenfalls eine Zentrierbohrung 52 oder einen Zentriervorsprung auf. Vorliegend ist dies eine Zentrierbohrung 52, in die der Zentriervorsprung 42 eingesetzt werden kann und so das Basiselement mit dem Rastelement ausrichtet.

Das Rastelement 50 weist ferner zumindest einen Einhakvorsprung 58 auf, der unter das Halteelement 36 bewegt wird und dadurch das Rastelement 50 an dem Basiselement 30 befestigt. Der oder die Einhakvorsprünge 58 sind prinzipiell beliebig ausgebildet, sofern sie mit dem Halteelement 56 Zusammenwirken können. In Figur 3a und 3b erstrecken sich die Einhakvorsprünge 58 radial von einem Außenring 51 , der um die Zentrierbohrung 52 angeordnet ist. Ausgehend von dort verbreitern sie sich, damit die Rastfläche, die vom Halteelement 36 gehalten wird, vergrößert ist. Vorliegend sind vier Einhakvorsprünge 58 ausgebildet. Bevorzugt sind Bohrungen 55 in den Flächen der Einhakvorsprünge 58 vorgesehen, mit denen das Rastelement 50 an den entsprechenden Seiten der Kastenmöbel befestigt wird. Um die Wandstärke der Einhakvorsprünge 58 aufgrund der benötigten Steifigkeit nicht zu groß auslegen zu müssen, können auf der vom Basiselement wegzeigenden Seite Verstärkungsrippen 57 ausgebildet sein.

Ferner umfasst das Rastelement 50 zumindest einen Rastvorsprung 56 der mit der Rastaussparung 38 zusammenwirkt. Generell kann der Rastvorsprung 56 beliebig ausgestaltet sein, solange mit der Rastaussparung 38 Zusammenwirken kann. Beispielsweise kann der Rastvorsprung 56 würfelförmig, quaderförmig oder halbkugelförmig ausgebildet sein. In Figur 3b ist zu erkennen, dass der Rastvorsprung 56 bevorzugt eine Rampe aufweist. Die Rampe beginnt im Bereich des Außenrings 51 der Zentrierbohrung 52 und erstreckt sich radial nach außen. Der rampenförmige Rastvorsprung 56 verbessert die Festigkeit in der eingerasteten Endposition, so dass leichte Stöße gegen die montierten Kastenmöbel den Rastvorsprung 56 nicht aus der Rastaussparung 38 herausspringen lassen. Die Rastaussparungen sind insbesondere nicht auch auf dem Einhakvorsprung 58 angeordnet, sondern auf eigenen Vorsprüngen 59. Die Vorsprünge 59 sind bevorzugt Federvorsprünge, die je nach Dicke der Wandstärke mehr oder weniger elastisch ausgebildet sind. Grundsätzlich ist es für die bessere Elastizität der Federvorsprünge bevorzugt, wenn die Vorsprünge hohl ausgebildet sind, d.h. von der Seite, die nach der Montage am Kastenmöbel anliegt ist der Rastvorsprung 56 ausgehöhlt, wie es in Figur 3a dargestellt ist. Die Wandstärke der Federvorsprünge beträgt insbesondere maximal 2mm, weiter bevorzugt maximal 1 ,5mm oder nur 1 mm.

Grundsätzlich ist es bevorzugt, dass die gesamte Montagevorrichtung 10 aus Kunststoff hergestellt ist. Es können aber auch einzelne Elemente aus Metall ausgebildet sein. Die Kastenmöbel, die eine solche Montagevorrichtung 10 umfassen, weisen ein Basiselement 630 an der Oberseite und ein Rastelement 50 an der Unterseite auf (oder anders herum), so dass sie mit einem entsprechenden Kastenmöbel mit einer gleichen Ausstattung oder mit Trennbrettern, die zwischen die Kastenmöbel eingesetzt werden kann, zusammengesetzt werden kann.

Der Einbau der Montagevorrichtung ist vergleichsweise einfach. Ein Kastenmöbel wird bereitgestellt und eine Aussparung für das Basiselement 30 oder für das Rastelement 50 vorgesehen, in der das Basiselement 30 oder das Rastelement 50 dann beispielsweise durch Verschrauben an den Bohrungen 39, 55 befestigt wird.

Wenn die Kastenmöbel aufeinander platziert werden sollen, wird das Rastelement 50 des ersten Kastenmöbels in das Basiselement 30 des zweiten Kastenmöbels eingeschoben, so dass die Einhakvorsprünge 58 zwischen die Halteelemente 36 eingesetzt werden. Bei der in den Figuren gezeigten Ausführungsform dürfen die Federvorsprünge 59 radial nicht zu lang sein, so dass sie sich mit den Halteelementen 36 nicht überschneiden, da das Rastelement 50 sonst beim Einsetzen in das Basiselement gegen die Federvorsprünge anschlägt. Der Zentriervorsprung 42 wird dabei in die Zentrierbohrung 52 eingesetzt. Wenn das

Rastelement 50 soweit an die Lagerplatte 32 gedrückt ist, dass die Einhakvorsprünge 58 in axialer Richtung zwischen den Halteelementen 36 und der Lagerplatte 32 liegen, dann wird eines der Kastenmöbel verdreht. Dadurch bewegen sich die Einhakvorsprünge 58 unter die Halteelemente 36 (oder die Halteelemente über die Rastelemente, je nachdem welches Element verdreht wird) und das Rastelement 50 kann nicht mehr axial aus dem Basiselement 30 herausgezogen werden, wenn es nicht zuvor weiter- oder zurückgedreht wird. Beim Verdrehen der Kastenmöbel gleiten die Federelemente 59 mit dem Rastvorsprung 56 an die Rampen 47 und werden elastisch verformt bis der Rastvorsprung in die Rastaussparung 46 einrastet. Das weitere Verdrehen ist nach dem Einrasten erschwert, so dass der Monteur auch fühlt, wenn die montierte Endstellung der Kastenmöbel erreicht ist. Für die Demontage werden die Kastenmöbel verdreht, so dass der Rastvorsprung 58 aus der Rastaussparung 46 herausspringt und die Einhakvorsprünge nicht mehr unter den Halteelementen 36 befinden. Dann kann das obere Kastenmöbel abgehoben werden.

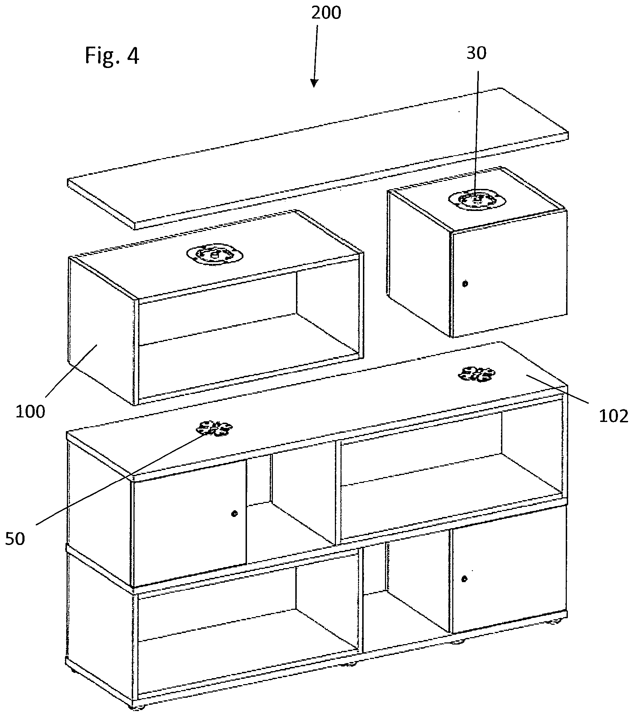

Ein Kastenmöbel 100 kann beispielsweise auf der Oberseite ein Basiselement 30 und auf der Unterseite ein Rastelement 50 aufweisen, so dass solche Kastenmöbel direkt aufeinander befestigt werden können. Das Basiselement 30 und das Rastelement 50 können dabei bevorzugt zueinander in einem Winkel angeordnet sein. In der bevorzugten Ausführungsform, die in den Figuren gezeigt ist, ist dieser Winkel 45° Grad um den Basiselement und Rastelement verdreht sein müssen um ineinander eingesteckt werden zu können. In Figur 4 ist eine Anordnung 200 von Kastenmöbeln 100 dargestellt. Diese Anordnung umfasst ferner eine Montageplatte 102, in die ebenfalls Teile einer Montagevorrichtung 10 eingebaut sind. In der Anordnung in Figur 2 sind die Kastenmöbel 100 mit zwei Basiselementen 30 versehen, während die Montageplatte 102 an den Gegenüberliegenden Seiten zwei Rastelemente 50 aufweist. Es ist jedoch ebenfalls möglich, sowohl Kastenmöbel 100 als auch Montageplatte 102 ein Basiselement 20 und ein Rastelement 50 aufweisen.

## Patentansprüche

1. Montagevorrichtung (10) zum Befestigen von Kastenmöbeln wie bspw. Schrank- oder Regalmodulen verwendet, die gestapelt dann einen entsprechenden Schrank oder ein entsprechendes Regal ausbilden, umfassend:
- ein Basiselement (30) mit einer Lagerplatte (32) und einem Halteelement (36), wobei die Lagerplatte (32) teilweise von dem Halteelement (36) abgedeckt und das Halteelement (36) von der Lagerplatte (32) beabstandet ist;
- ein Rastelement (50), das mit zumindest einem Einhakvorsprung (58) an die Lagerplatte (32) bewegbar ist und das Rastelement an der Lagerplatte (32) verschwenkbar ist, so dass der Einhakvorsprung in Umfangsrichtung unter das Halteelement (36) bewegbar ist, wobei in dem Basiselement (30) oder dem Rastelement (50) eine Rastaussparung (46) und an dem Gegenstück ein entsprechender Rastvorsprung (58) vorgesehen ist, so dass der Rastvorsprung (58) in der Endstellung in die Rastaussparung (46) einrastet, und wobei der Rastvorsprung (58) auf einem sich radial erstreckenden Federelement (59) angeordnet ist,
wobei das Rastelement (50) axial in das Basiselement (30) geschoben wird und in Umfangsrichtung verdreht wird, so dass die Montagevorrichtung (10) in sich in axialer Richtung befestigt ist und nichtmehr auseinander gezogen werden kann.

2. Montagevorrichtung (10) nach Anspruch 1, bei der das Basiselement (30) und/oder das Rastelement (50) einstückig ausgebildet sind.

3. Montagevorrichtung (10) nach Anspruch 1 oder 2, bei der das Halteelement (36) am äußeren Umfangsbereich des Basiselements (30) angebracht ist und sich radial nach innen erstreckt.

4. Montagevorrichtung (10) nach Anspruch 1 , bei der der Rastvorsprung (58) rampenförmig ausgebildet ist.

5. Montagevorrichtung (10) nach einem der vorhergehenden Ansprüche, bei der das Basiselement (30) am Außenrand einen Befestigungsbereich (38) aufweist.

6. Montagevorrichtung (10) nach einem der vorhergehenden Ansprüche, bei der das Basiselement (30) ein Vielzahl von Halteelementen (38) und das Rastelement (50) eine Vielzahl von Rastvorsprüngen (58) aufweist.

7. Montagevorrichtung (10) nach einem der vorhergehenden Ansprüche, bei der im Zentralbereich des Basiselements (30) und des Rastelements (50) eine Zentrierbohrung (52) oder ein Zentriervorsprung (42) ausgebildet ist, mit dem das Basiselement (30) und das Rastelement (50) ausrichtbar sind.

8. Montagevorrichtung (10) nach einem der vorhergehenden Ansprüche, wobei zumindest das Rastelement (50) aus Kunststoff ausgebildet ist.

9. Kastenmöbel (100) umfassend eine Montagevorrichtung (10) nach einem der Ansprüche 1 bis 8, wobei das Basiseiement (30) auf einer ersten Verbindungsseite und das Rastelement (50) auf einer gegenüberliegenden Verbindungsseite vorgesehen ist.

10. Anordnung (200) aus einer Mehrzahl von Kastenmöbel (100), umfassend zumindest eine Montagevorrichtung (10) nach einem der Ansprüche 1 bis 8, zur Verbindung der Mehrzahl von Kastenmöbeln (100).

11. Anordnung (200) nach Anspruch 10, ferner umfassend eine Montageplatte (102) mit zumindest einem Basiselement (30) und/oder einem Rastelement (50), die auf gegenüberliegenden Seiten der Montageplatte (102) angeordnet sind.

## Claims

1. A mounting device (10) used for securing case furniture such as for example cabinet or shelf modules, which then form a corresponding cabinet or a corresponding shelf in stacked manner, comprising:
- a base element (30) with a bearing plate (32) and a retaining element (36), wherein the bearing plate (32) is partially covered by the retaining element (36) and the retaining element (36) is spaced from the bearing plate (32);
- a locking element (50), which is movable on the bearing plate (32) with at least one hooking projection (58), and the locking element is pivotable on the bearing plate (32) such that the hooking projection is movable below the retaining element (36) in circumferential direction, wherein a locking recess (46) is provided in the base element (30) or the locking element (50) and a corresponding locking projection (58) is provided on the counterpart such that the locking projection (58) locks into the locking recess (46) in the final position, and wherein the locking projection (58) is arranged on a radially extending spring element (59),
wherein the locking element (50) is axially shifted into the base element (30) and is rotated in circumferential direction such that the mounting device (10) is secured in axial direction in itself and can no longer be pulled apart.

2. The mounting device (10) according to claim 1, in which the base element (30) and/or the locking element (50) are integrally formed.

3. The mounting device (10) according to claim 1 or 2, in which the retaining element (36) is attached to the outer circumferential area of the base element (30) and extends radially inwards.

4. The mounting device (10) according to claim 1, in which the locking projection (58) is ramp-shaped formed.

5. The mounting device (10) according to any one of the preceding claims, in which the base element (30) has a securing area (38) at the outer edge.

6. The mounting device (10) according to any one of the preceding claims, in which the base element (30) comprises a plurality of retaining elements (38) and the locking element (50) comprises a plurality of locking projections (58).

7. The mounting device (10) according to any one of the preceding claims, in which a centering hole (52) or a centering projection (42) is formed in the central area of the base element (30) and of the locking element (50), by which the base element (30) and the locking element (50) can be aligned.

8. The mounting device (10) according to any one of the preceding claims, wherein at least the locking element (50) is formed of plastic.

9. A case furniture (100) comprising a mounting device (10) according to any one of claims 1 to 8, wherein the base element (30) is provided on a first connection side and the locking element (50) is provided on an opposing connection side.

10. An arrangement (200) of a plurality of case furniture (100), comprising at least one mounting device (10) according to any one of claims 1 to 8 for connection of the plurality of case furniture (100).

11. The arrangement (200) according to claim 10, further comprising a mounting plate (102) with at least one base element (30) and/or locking element (50), which are arranged on opposing sides of the mounting plate (102).

## Revendications

1. Dispositif de montage (10) pour fixer des meubles en caisson tels que, par exemple, des modules d'armoire ou d'étagère qui sont empilés et forment ensuite une armoire correspondante ou une étagère correspondante, comprenant :
- un élément de base (30) avec une plaque d'appui (32) et un élément de support (36), la plaque d'appui (32) étant en partie recouverte par l'élément de support (36) et l'élément de support (36) étant espacé de la plaque d'appui (32) ;
- un élément d'enclenchement (50) mobile sur la plaque d'appui (32) avec au moins une saillie d'accrochage (58) et l'élément d'enclenchement pouvant pivoter sur la plaque d'appui (32), de telle sorte que la saillie d'accrochage est mobile sous l'élément de support (36) dans une direction circonférentielle, un évidement d'enclenchement (46) étant prévu dans l'élément de base (30) ou l'élément d'enclenchement (50), et une saillie d'enclenchement (58) correspondante étant prévue sur la pièce complémentaire, de telle sorte que la saillie d'enclenchement (58) dans la position finale s'enclenche dans l'évidement d'enclenchement (46), et la saillie d'enclenchement (58) étant agencée sur un élément à ressort (59) s'étendant radialement,
l'élément d'enclenchement (50) étant déplacé axialement dans l'élément de base (30) et tournant dans une direction circonférentielle, de telle sorte que le dispositif de montage (10) se fixe dans la direction axiale et ne peut plus être écarté.

2. Dispositif de montage (10) selon la revendication 1, dans lequel l'élément de base (30) et/ou l'élément d'enclenchement (50) sont formés d'un seul tenant.

3. Dispositif de montage (10) selon la revendication 1 ou 2, dans lequel l'élément de support (36) est monté sur la zone circonférentielle extérieure de l'élément de base (30) et s'étend radialement vers l'intérieur.

4. Dispositif de montage (10) selon la revendication 1, dans lequel la saillie d'enclenchement (58) est réalisée sous forme de rampe.

5. Dispositif de montage (10) selon l'une des revendications précédentes, dans lequel l'élément de base (30) comporte une zone de fixation (38) sur le bord extérieur.

6. Dispositif de montage (10) selon l'une des revendications précédentes, dans lequel l'élément de base (30) comporte une pluralité d'éléments de support (38) et l'élément d'enclenchement (50) comporte une pluralité de saillies d'enclenchement (58).

7. Dispositif de montage (10) selon l'une des revendications précédentes, dans lequel dans la zone centrale de l'élément de base (30) et de l'élément d'enclenchement (50) est formé un trou de centrage (52) et/ou une saillie de centrage (42), au moyen duquel l'élément de base (30) et l'élément d'enclenchement (50) peuvent être orientés.

8. Dispositif de montage (10) selon l'une des revendications précédentes, dans lequel au moins l'élément d'enclenchement (50) est réalisé en matière plastique.

9. Meuble en caisson (100) comprenant un dispositif de montage (10) selon l'une des revendications 1 à 8, dans lequel l'élément de base (30) est prévu sur un premier côté d'assemblage et l'élément d'enclenchement (50) est prévu sur un côté d'assemblage opposé.

10. Ensemble (200) constitué d'une pluralité de meubles en caisson (100), comprenant au moins un dispositif de montage (10) selon l'une des revendications 1 à 8, pour l'assemblage de la pluralité de meubles en caisson (100).

11. Ensemble (200) selon la revendication 10, comprenant en outre une plaque de montage (102) avec au moins un élément de base (30) et/ou un élément d'enclenchement (50) qui sont agencés sur des côtés opposés de la plaque de montage (102).
